# EUROPEAN PATENT SPECIFICATION

(11) **EP 0 743 887 B1**
(45) Date of publication and mention of the grant of the patent: **10.02.1999**
(21) Application number: 95934771.7
(22) Date of filing: 02.11.1995
(51) Int. Cl.: B23K 1/19, B23K 35/28, H01J 35/18

(54) **METHOD FOR THE VACUUMTIGHT SEALING OF A BERYLLIUM WINDOW TO A METAL SUBSTRATE**
VERFAHREN ZUM FIXIEREN EINES FENSTERS AUS BERYLLIUM AUF EINEM METALLISCHEN GRUNDKÖRPER MIT EINEM VACUUMDICHTEN VERSCHLUSS
PROCEDE DE FIXATION D'UNE FENETRE DE BERYLLIUM SUR UN SUBSTRAT METALLIQUE PAR UN JOINT ETANCHE AU VIDE

(30) Priority: 12.12.1994 EP 94203594
(43) Date of publication of application: 27.11.1996
(73) Proprietor: Koninklijke Philips Electronics N.V., 5621 BA Eindhoven (NL)
(72) Inventor: GIJSBERS, Jan, Cornelis, NL-5621 BA Eindhoven (NL); VAN DE VEN, Adrianus, Johannes, Cornelis, NL-5667 AB Geldrop (NL)
(74) Representative: Bakker, Hendrik
(86) International application number: IB9500948
(87) International publication number: WO9618477

(56) References cited:
- EP-A- 0 699 498
- PATENT ABSTRACTS OF JAPAN, Vol. 15, No. 6, M-1066; & JP,A,2 258 165 (RIGAKU CORP), 18 October 1990.
- PATENT ABSTRACTS OF JAPAN, Vol. 12, No. 328, E-654; & JP,A,63 091 940 (MATSUSHITA ELECTRIC IND CO LTD), 22 April 1988.

## Description

The invention relates to a method for the vacuumtight sealing of a thin beryllium window to a metal substrate, to an assembly consisting of a beryllium window and a metal mount, and to an X-ray component.

A method, assembly and component of the kind defined in the preamble of claims 1, 9 and 10 are known from Patent Abstracts of Japan, Vol. 15, No. 6, M-1066, abstract of JP, A, 2-258165. In general a method is known in which several intermediate layers are provided between the window and the metal substrate. On the beryllium there is provided a first layer which can suitably adhere to the beryllium. This layer consists of, for example titanium; however, other, chemically related metals are also feasible. However, it is a common drawback of these metals that, generally speaking their solderability is poor, so that they poorly adhere to the metal of the substrate, for example Kovar according to the known method. In order to solve this problem, above the first layer there is provided a layer which can be readily soldered, for example a nickel layer, but other readily solderable metals are also feasible. In order to prevent the metals of the said two layers from dissolving one into the other so that their adhesive effect is lost, the known method involves the use of a barrier layer, for example of vanadium, for keeping the first two layers separated. After deposition of these layers on the beryllium window, the window can be soldered to the substrate. The solder required for this purpose is a mixture of mainly copper and silver, it being necessary to heat the workpiece to 780 °C. However, if the beryllium window is heated to this temperature, the solder is liable to creep along the edges of said three layers so that it reaches the beryllium which then dissolves in the solder, thus degrading the reliability of the soldered seal.

Manufacturers and users of X-ray equipment, such as X-ray tubes or X-ray detectors, tend to utilize increasingly thinner beryllium windows because of their lower absorption for long wave X-rays. Known beryllium windows have a thickness of the order of magnitude of 150 µm (for example, see US-A-4431709 which mentions a thickness of 250 µm). Nowadays a thickness of less than 100 µm, even as little as 25 µm is pursued. For these thicknesses said drawback of dissolving of the beryllium is even more pronounced. Moreover, a beryllium window of said small thickness tends to warp at tie stated temperatures, so that appropriate vacuumtight sealing (for example, as required in X-ray tubes) cannot be achieved.

Moreover, in the generally known method for sealing beryllium windows the substrate must also have a thermal expansion coefficient which approximately equals that of beryllium, so that the choice of the metals and alloys for the substrate is limited.

In the known method according to the said Japanese Abstract of JP, A, 2-258165 an aluminium intermediate layer is formed in the plane of contact between the window and the substrate, the aluminium being provided in the form of a ring between the substrate and the window, after which the stack consisting of the substrate, the aluminium ring and the window is compressed at a temperature in the order of magnitude of 800 °C. In this known method a seal between the beryllium window and the substrate is produced which in general is suitably vacuumtight. However, as in this known method of sealing the substrate and the window relatively high temperatures are involved the substrate and the window should have substantially the same coefficients of thermal expansion.

It is an object of the invention to provide a method for more securely sealing a thin beryllium window to a metal substrate in a reliable, vacuumtight manner.

To this end, the method of the invention, which is defined by claim 1, is characterized in that the purity of the aluminium is better than 99.9% by weight. Tests have demonstrated that suitably reliable adhesion is obtained when the purity of the aluminium is chosen in conformity with the said measures according to the invention. Also a seal between the beryllium window and the substrate is produced which is suitably vacuumtight also in the case of temperatures of the order of 450 °C as required for the degassing of, for example an X-ray tube upon its evacuation.

In order to enhance the effect of the rupture of the oxide layer on the aluminium, a preferred embodiment of the invention is characterized in that the aluminium ring has a circular or elliptical cross-section. As is known, such a cross-section has a minimal circumference which is comparatively strongly enlarged by the compression. The said measures strengthen the phenomenon that upon compression the oxide layer always present on the aluminium ring breaks open, so that the pure, non-oxidized aluminium comes into contact with the beryllium and with the substrate, so that strong and durable adhesion is achieved.

In conformity with a further step of the invention, the stack formed by the substrate, the aluminium ring and the beryllium window is compressed in an atmosphere which is poor in oxygen, which atmosphere consists of a mixture of nitrogen and hydrogen. It has been found that a mixture of nitrogen and hydrogen, notably with a ratio of 93% by volume of nitrogen and 7% by volume of hydrogen, offers suitable results in this respect. A sufficiently high degree of ductility of the aluminium benefits the sealing process. To this end, in conformity with a further step of the invention the temperature at which the stack formed by the substrate, the aluminium ring and the window is compressed is between 450 °C and 550 °C.

Furthermore, the method of the invention is characterized in that the pressure at which the stack formed by the substrate, the aluminium ring and the window is compressed is between 30 N/mm² and 70 N/mm², measured across the surface of the flattened aluminium. Tests have demonstrated that optimum reliability of the seal is obtained when a pressure is selected from said range.

Further embodiments of the invention are described in the remaining dependent Claims.

The invention also provides an assembly according to claim 9 and an X-ray component according to claim 10.

These and other aspects of the invention will be apparent from and elucidated with reference to the embodiments described hereinafter.

In the drawings:
Fig. 1a is a sectional view of an X-ray tube comprising an X-ray window in accordance with the invention;
Fig. 1b is a sectional view of an X-ray detector comprising an X-ray window in accordance with the invention;
Fig. 2a shows an X-ray window in accordance with the invention prior to compression with the substrate;
Fig. 2b shows an X-ray window in accordance with the invention after compression with the substrate;
Fig. 3a is a detailed representation of an X-ray window in accordance with the invention prior to compression with the substrate;
Fig. 3b is a detailed representation of an X-ray window in accordance with the invention after compression with the substrate;
Fig. 4 is a graphic representation of the variation of the temperature and the pressure as a function of time during compression of the X-ray window with the substrate in accordance with the invention.

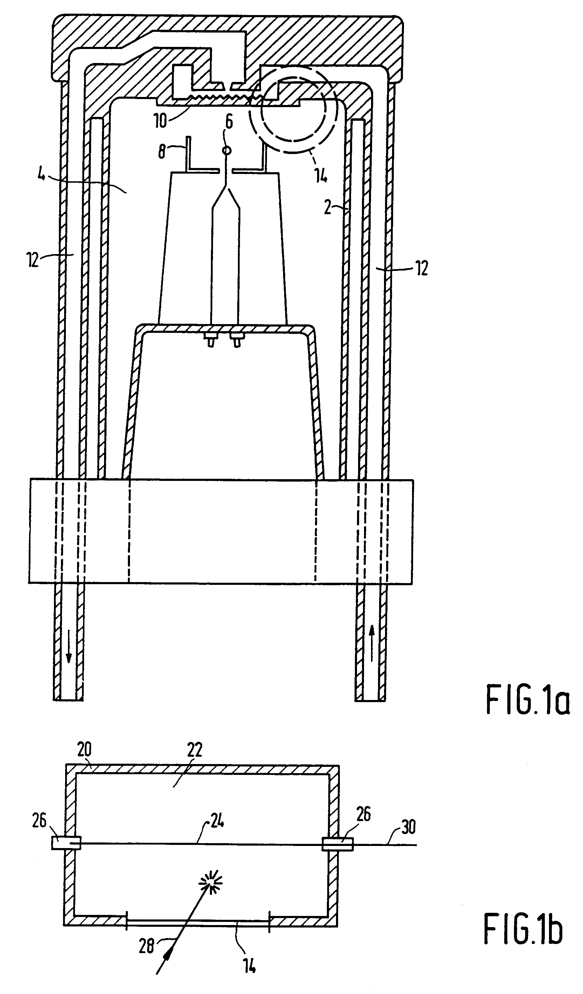

Fig. 1a shows an X-ray tube in which the X-ray window in accordance with the invention can be used. The tube comprises a housing 2 which encloses a vacuum space 4 and in which the other tube components, such as a filament 6 enclosed by a cathode structure 8, are accommodated. Electrons emitted by the filament are incident on the anode 10 with a high energy which is converted mainly into heat. A substantial part of this heat is dissipated by cooling water transported via the ducts 12. In the anode 10 X-rays are generated and emanate from the tube via the X-ray window 14. This window should be as thin as possible so as to minimize the X-ray absorption; however, its thickness must be sufficient to withstand permanently the atmospheric pressure of the ambient air. This must so in various operating conditions, for example fluctuating temperatures of the tube and the window. Severe requirements are thus imposed as regards the seal between the window and the substrate, being the tube housing in this case.

Fig. 1b shows an X-ray detector in which the X-ray window in accordance with the invention can be used. The detector comprises a housing 20 which is provided with an entrance window 14. The housing encloses a space 22 which contains a discharge gas and which accommodates further detector components, such as an anode wire 24 which is insulated from the metal housing 20 by means of insulators 26. Incident X-rays 28 cause ionization of the discharge gas 22, so that a charge pulse is received by the anode wire 24, said pulse being processed by processing equipment (not shown) connected to output 30. The input window 14 should be as thin as possible so as to minimize the X-ray absorption; however, its thickness must be sufficient to ensure suitable gastight sealing in various operating conditions, for example fluctuating temperatures. Severe requirements are thus imposed as regards the seal between the window and the substrate, being the detector housing in this case.

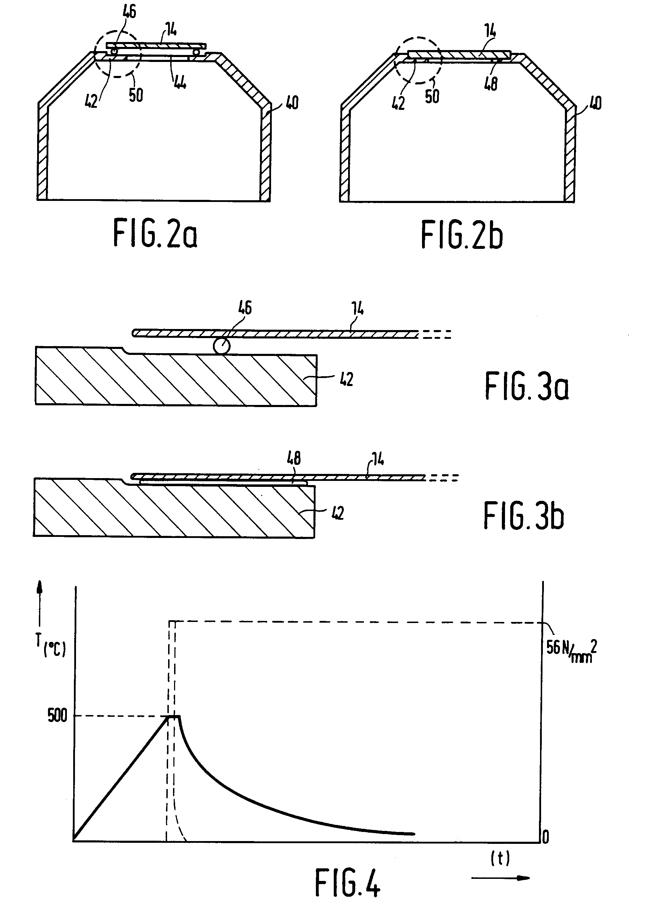

Figs. 2a and 2b show a part 40 of a housing of an X-ray tube prior to (Fig. 2a) and after (Fig. 2b) compression of the window with the substrate which is in this case formed by the edge 42 of the housing 40. The part 40 of the housing has a conical shape in which there is recessed an opening 44 which is bounded by the edge 42. The vacuumtight seal must be realised between this edge and the beryllium window 14. To this end, aluminium in the form of a ring 46 of round cross-section is arranged between the substrate 42 and the window 14. After compression, the ring 46 has been flattened so as to form a ring 48 of elongate cross-section as will be described in detail hereinafter with reference to the Figs. 3a and 3b.

Figs. 3a and 3b show parts of the Figs. 2a and 2b, respectively, which are denoted therein by circular areas 50. Notably Fig. 3b clearly shows the elongate shape of the flattened ring 48. In order to achieve suitable sealing between the window 14 and the substrate 42, a round beryllium window 14 having a diameter of 23 mm and a thickness of 75 µm is assumed. The substrate 42 (i.e. the housing of the X-ray tube) may consist of copper or the copper-nickel alloy "Monel-400" or the nickel-iron alloy "NiFe-75" (DIN designation:RNi-5, materialnumber 2.4596); notably the latter two materials have a thermal expansion coefficient which approximates that of beryllium, so that temperature variations will not lead to undesirable material stresses. The round opening 44 has a diameter of 18 mm, whereas the outer circle of the edge 42 has a diameter slightly larger than 23 mm. Between the window 14 and the substrate 42 there is arranged an aluminium ring 46 having a diameter of 20 mm and a preferably round cross-section of a diameter of 0.7 mm and a material purity of 99.99% (by weight). Prior to the further treatment, the aluminium ring is degreased by immersion in hexane and subsequently in ethanol, after which further impurities are removed by heating the ring to 350 °C for 10 minutes. The stack formed by the window 14, the ring 46 and the substrate 40, 42 is heated to a temperature of 500 °C, for example in a furnace in which a pressure can still be exerted on the stack. In the furnace an atmosphere which is low in oxygen is maintained, for example a mixture of 93% N₂ and 7% H₂ (by volume). This atmosphere has the advantage that any residual O₂ (for example, caused by leakage) is bound by H₂. At said temperature of 500 °C the aluminium is sufficiently ductile so as to be deformed by a comparatively small force. A compressive force of 9 kN is exerted, corresponding to a pressure of 56 N/mm² for the above dimensions. This force is applied so that it gradually increases during 0.2 s, after which it is maintained for approximately 20 s. Subsequently, the pressure is reduced to zero in the course of some tens of seconds during which the temperature is allowed to decrease by gradual cooling. The described variation of pressure (p) and temperature (T) is graphically shown in Fig. 4 in which the temperature variation is denoted by a solid line and the pressure variation by a dashed line, both as a function of time (t).

It has been found that the above treatment provides sufficiently strong and reliable sealing of the beryllium window to the substrate.

## Claims

1. A method for the vacuumtight sealing of a thin beryllium window (14) to a metal substrate (42), characterized in that
* an aluminium intermediate layer (48) is formed in the plane of contact between the window (14) and the substrate (42), the aluminium being provided in the form of a ring (46) between the substrate (42) and the window (14),
* after which the stack consisting of the substrate (42), the aluminium ring (46) and the window (14) is compressed by a pressure and at a temperature sufficient to render the aluminium ductile,
characterized in that the purity of the aluminium is better than 99.9 % by weight.

2. A method as claimed in Claim 1, characterized in that the aluminium ring (46) has a circular or elliptical cross-section.

3. A method as claimed in Claim 1, in which the stack formed by the substrate (42), the aluminium ring (46) and the window (14) is compressed in an atmosphere which is poor in oxygen, the atmosphere consisting of a mixture of nitrogen and hydrogen.

4. A method as claimed in Claim 1, characterized in that the temperature at which the stack formed by the substrate (42), the aluminium ring (46) and the window (14) is compressed between 450 °C and 500 °C.

5. A method as claimed in Claim 1, characterized in that the pressure at which the stack formed by the substrate (42), the aluminium ring (46) and the window (14) is compressed is between 30 N/mm² and 70 N/mm², measured across the surface of the flattened aluminium (48).

6. A method as claimed in Claim 5, characterized in that the pressure whereby the stack formed by the substrate (42), the aluminium ring (46) and the window (14) is compressed gradually increases in a period of time of between 0.1 s and 5 s.

7. A method as claimed in Claim 1, characterized in that the beryllium window (14) has a thickness of between 25 µm and 150 µm.

8. A method as claimed in Claim 1, characterized in that the substrate (42) consists of copper or a copper-nickel alloy or a nickel-iron alloy.

9. An assembly consisting of a beryllium window (14) and a metal mount, exclusively aluminium being present in the plane of contact between the window and the material of the mount, characterized in that the purity of the aluminium is better than 99.9% by weight.

10. An X-ray component, such as an X-ray tube or an X-ray detector, which is provided with a beryllium window (14) on a metal substrate (42) and in which exclusively aluminium is present in the plane of contact between the window and the substrate, characterized in that the purity of the aluminium is better than 99.9% by weight.

## Patentansprüche

1. Verfahren zum vakuumdichten Fixieren eines dünnen Beryllium-Fensters (14) auf einem Metall-Grundkörper (42), dadurch gekennzeichnet, dass
* eine Aluminiumzwischenschicht (48) in der Kontaktebene zwischen dem Fenster (14) und dem Grundkörper (42) gebildet wird, wobei das Aluminium in der Form eines Ringes (46) zwischen dem Grundkörper (42) und dem Fenster (14) angeordnet wird.
* wonach der aus dem Grundkörper (42), dem Aluminiumring (46) und dem Fenster (14) bestehende Stapel zum Duktilmachen des Aluminiums mit einem ausreichenden Druck und auf einer ausreichenden Temperatur zusammengedrückt wird,
dadurch gekennzeichnet, daß die Reinheit des Aluminiums besser ist als 99,9 Gewichtsprozent.

2. Verfahen nach Anspruch 1, dadurch gekennzeichnet, daß der Aluminiumring (46) einen kreisförmigen oder elliptischen Querschnitt hat.

3. Verfahren nach Anspruch 1, mit dem der aus dem Grundkörper (42), dem Aluminiumring (46) und dem Fenster (14) bestehende Stapel in einem sauerstoffarmen Atmosphäre zusammengedrückt wird, wobei die Atmosphäre aus einer Mischung von Stickstoff und Wasserstoff besteht.

4. Verfahren nach Anspruch 1, dadurch gekennzeichnet, daß die Temperatur, bei der der aus dem Substrat (42), dem Aluminiumring (46) und dem Fenster (14) bestehende Stapel zwischen 450°C und 500°C zusammengedrückt wird.

5. Verfahren nach Anspruch 1, dadurch gekennzeichnet, daß der Druck, bei dem der aus dem Grundkörper (42), dem Alumiumring (46) und dem Fenster (14) zusammengesetzte Stapel zwischen 30N/mm² und 70 N/mm² zusammengedrückt wird, wenn gemessen an der Oberfläche des abgeflachten Alumiums (48).

6. Verfahren nach Anspruch 5, dadurch gekennzeichnet, daß der Druck, bei dem der aus dem Grundkörper (42), dem Aluminiumring (46) und dem Fenster (14) zusammengesetzte Stapel zusammengedrückt wird, in einer Zeit zwischen 0,1 s und 5 s allmählich ansteigt.

7. Verfahren nach Anspruch 1, dadurch gekennzeichnet, daß das Beryllium-Fenster (14) eine Dicke zwischen 25 und 150 µm hat.

8. Verfahren nach Anspruch 1, dadurch gekennzeichnet, daß der Grundkörper (42) aus Kupfer oder aus einer Kupfer-Nickellegierung oder aus einer Nickel-Eisenlegierung besteht.

9. Einrichtung bestehend aus einem Beryllium-Fenster (14) und einem Metall-Grundkörper, wobei ausschließlich Aluminium in der Kontaktebene zwischen dem Fenster und dem Material des Grundkörpers vorhanden ist, dadurch gekennzeichnet, daß die Reinheit des Aluminiums besser als 99,9 Gewichtsprozent ist.

10. Röntgenbauteil, wie z.B. eine Röntgenröhre oder ein Röntgendetektor, die bzw. der mit einem Beryllium-Fenster (14) auf einem Metallgrundkörper (42) versehen ist, und in der bzw. in dem ausschließlich Aluminium auf der Kontaktebene zwischen dem Fenster und dem Grundkörper vorhanden ist, dadurch gekennzeichnet, daß die Reinheit des Aluminiums besser als 99,9 Gewichtsprozent ist.

## Revendications

1. Procédé pour la fixation étanche au vide d'une fenêtre mince en béryllium (14) sur un substrat métallique (42), le procédé comprenant
* qu'une couche intermédiaire en aluminium (48) est formée dans le plan de contact compris entre la fenêtre (14) et le substrat (42), l'aluminium étant appliqué sous forme d'un anneau (46) entre le substrat (42) et la fenêtre (14),
* après quoi la pile constituée par le substrat (42), l'anneau en aluminium (46) et la fenêtre (14) est comprimée sous une pression et à une température qui suffisent pour rendre l'aluminium ductile,
caractérisé en ce que la pureté de l'aluminium est meilleure que 99,9% en poids.

2. Procédé selon la revendication 1, caractérisé en ce que l'anneau en aluminium (46) présente une section transversale circulaire ou elliptique.

3. Procédé selon la revendication 1, selon lequel la pile formée par le substrat (42), l'anneau en aluminium (46) et la fenêtre (14) est comprimée dans une atmosphère qui est pauvre en oxygène, l'atmosphère étant constituée par un mélange d'azote et d'hydrogène.

4. Procédé selon la revendication 1, caractérisé en ce que la température à laquelle la pile formée par le substrat (42), l'anneau en aluminium (46) et la fenêtre (14) est comprimée à une température comprise entre 450°C et 500°C.

5. Procédé selon la revendication 1, caractérisé en ce que la pression sous laquelle la pile formée par le substrat (42), l'anneau en aluminium (46) et la fenêtre (14) est comprimée se situe entre 30 N/mm² et 70 N/mm², mesurée sur la surface de l'aluminium aplati (48).

6. Procédé selon la revendication 5, caractérisé en ce que la pression sous laquelle la pile formée par le substrat (42), l'anneau en aluminium (46) et la fenêtre (14) est comprimée d'une façon graduelle augmente dans une période de temps comprise entre 0.1 sec et 5 sec.

7. Procédé selon la revendication 1, caractérisé en ce que la fenêtre (14) en béryllium présente une épaisseur comprise entre 25 µm et 150 µm.

8. Procédé selon la revendication 1, caractérisé en ce que le substrat (42) est constitué par du cuivre ou un alliage de cuivre-nickel ou un alliage de nickel-fer.

9. Ensemble constitué par une fenêtre en béryllium (14) et un support métallique, de l'aluminium étant exclusivement présent dans le plan de contact compris entre la fenêtre et le matériau du support, caractérisé en ce que la pureté de l'aluminium est meilleure que 99.9 % en poids.

10. Composant à rayons X, tel qu'un tube à rayons X ou un détecteur à rayons X, qui est muni d'une fenêtre (14) fixée sur un substrat métallique (42) et dans lequel de l'aluminium est exclusivement présent dans le plan de contact compris entre la fenêtre et le substrat, caractérisé en ce que la pureté de l'aluminium est meilleure que 99.9 % en poids.
